Europäisches Patentamt

European Patent Office

Office européen des brevets

(11) Veröffentlichungsnummer: **0 067 273**
**B1**

# EUROPÄISCHE PATENTSCHRIFT

(45) Veröffentlichungstag der Patentschrift:
**27.12.84**

(51) Int. Cl.³: **C 03 B 9/02**

(21) Anmeldenummer: **82101777.9**

(22) Anmeldetag: **06.03.82**

(54) **Vorrichtung zum Bewegen von Glasmacher-Pfeifen.**

(30) Priorität: **11.06.81 DE 3123076**

(43) Veröffentlichungstag der Anmeldung:
**22.12.82 Patentblatt 82/51**

(45) Bekanntmachung des Hinweises auf die Patenterteilung:
**27.12.84 Patentblatt 84/52**

(84) Benannte Vertragsstaaten:
**FR GB IT SE**

(56) Entgegenhaltungen:
**DE - C - 249 419**
**DE - C - 287 479**
**US - A - 1 527 558**
**US - A - 1 551 934**

(73) Patentinhaber: **J. WALTER CO. MASCHINEN GMBH,
Ziegelwinkel 12, D-8640 Kronach (DE)**

(72) Erfinder: **Liebal, Eberhard, Ziegelwinkel 50a,
D-8640 Kronach (DE)**

(74) Vertreter: **LOUIS, PÖHLAU, LOHRENTZ & SEGETH,
Kesslerplatz 1, D-8500 Nürnberg (DE)**

## Beschreibung

Die Erfindung betrifft eine Vorrichtung zum Bewegen von Glasmacherpfeifen zwischen einer etwa horizontalen und einer etwa vertikalen Stellung, welche einen um eine Schwenkachse drehbaren Schwenkarm aufweist, der an seinem freien Ende eine Greifeinrichtung trägt.

Eine derartige Vorrichtung ist Gegenstand der nicht vorveröffentlichten, unter Artikel 54(3) EPÜ fallenden EP-A Nr. 0066671. Bei dieser Vorrichtung gemäss dem älteren Vorschlag ist jedoch nachteilig, dass nur eine Bewegung der Glasmacherpfeife zwischen einer horizontalen und einer vertikalen Stellung möglich ist, ohne dass irgendeine seitliche Versetzung oder dergleichen erreicht werden kann. Es gibt nun aber Gelegenheiten, bei denen eine Vorrichtung günstig eingesetzt werden könnte, wenn sie in der Lage ist, die Glasmacherpfeife zum einen um eine im wesentlichen horizontale Achse zu schwenken, sie aber zum anderen seitlich zu versetzen. Beispielsweise ist es bekannt, das Külbel bei der Herstellung von Glashohlkörpern mittels einer Vorrichtung herzustellen, bei welcher die Glasmacherpfeife, etwa horizontal liegend, während des Blasens des Külbels rotiert. Nach Abschluss des Blasvorganges muss dann die Glasmacherpfeife aus der Vorrichtung, in der sie etwa horizontal liegt, entnommen und etwa senkrecht während einer gewissen Zeit gehaltert werden, in der das Külbel abkühlt. Die Senkrechtstellung ist vor allem deswegen erforderlich, um ungewollte Verformungen des Külbels infolge des Umstandes, dass das Glas noch nicht hart ist, zu vermeiden. In diesem Falle genügt es nicht, wenn die Glasmacherpfeife lediglich senkrecht gestellt wird, da ja dann die Vorrichtung für die Aufnahme einer neuen Pfeife blockiert wäre. Es muss vielmehr gleichzeitig die Glasmacherpfeife aus der Position gebracht werden, die für die Aufnahme der neuen, den zur Külbelherstellung dienenden Glasposten tragenden Pfeife erforderlich ist.

Bisher geht man hier im allgemeinen so vor, dass die Glasmacherpfeife von Hand aus der Vorrichtung entnommen und senkrecht in irgendeine Speichereinrichtung eingehängt wird. Dieses Vorgehen hat natürlich den Nachteil, dass der Glasmacher während der Zeit, in der er die Pfeife aus der Vorrichtung entnimmt und etwa senkrecht aufhängt, keine Zeit hat, um bereits einen neuen Glasposten mit einer anderen Pfeife aus dem Ofen zu entnehmen.

Trotz dieses Nachteiles hat man bisher für den entsprechenden Vorgang noch keine Vorrichtungen eingesetzt, wohl deswegen, weil man davon ausging, dass entsprechende Vorrichtungen zu kompliziert aufgebaut sein müssten und deswegen zu störanfällig wären. Hierbei ist zu berücksichtigen, dass die Glasherstellung bei relativ hoher Temperatur und ungünstigen Umgebungsbedingungen erfolgt, weshalb nur solche Vorrichtungen Verwendung finden können, die einfach aufgebaut und damit weitgehend störunanfällig sind. Darüber hinaus müssen Vorrichtungen, um überhaupt von Glashütten akzeptiert zu werden, vergleichweise billig sein.

Der Erfindung liegt nun die Aufgabe zugrunde, eine Vorrichtung zu schaffen, die in der Lage ist, die vorerwähnten Bewegungen auszuführen, gleichzeitig aber äusserst einfach aufgebaut und damit billig sowie wenig störanfällig ist.

Zur Lösung wird nach der Erfindung eine Vorrichtung der eingangs erwähnten Art vorgeschlagen, bei der zudem die Schwenkachse in einem Ausleger drehbar gelagert ist, welcher in Abstand vom Schwenkarm um eine senkrecht zur Schwenkachse verlaufende, feststehende horizontale Querachse drehbar ist, und bei der die Schwenkachse mit der Querachse getriebemässig derart gekoppelt ist, dass bei Drehung des Auslegers um die Querachse gleichzeitig eine Drehung der Schwenkachse mit dem die Greifeinrichtung aufweisenden Schwenkarm erfolgt. Die getriebemässige Kopplung zwischen Schwenk- und Querachse erfolgt dabei in besonders einfacher Weise derart, dass die Schwenkachse an ihrem dem Schwenkarm entfernten Ende drehfest ein Zahnrad trägt, welches mit einem auf der Querachse festen Zahnrad kämmt, wobei die beiden Zahnräder auf der Schwenkachse und auf der Querachse vorteilhafterweise als Kegelzahnräder ausgebildet sind.

Eine derartige Vorrichtung ist sehr einfach aufgebaut, insbesondere, wenn das zur Kopplung von Quer- und Schwenkachse dienende Getriebe nur von zwei Zahnrädern gebildet ist. Infolgedessen lässt sich die Vorrichtung preisgünstig herstellen, und sie ist darüberhinaus wenig störanfällig, so dass sie ohne Schwierigkeiten auch unter rauhen Einsatzbedingungen verwendet werden kann. Die Getriebekopplung ist so gewählt, dass zum einen der Ausleger, zum anderen auch der Schwenkarm selbst eine Schwenkbewegung um 90° macht. Hierdurch erreicht man, dass die Glasmacherpfeife aus einer horizontalen in eine vertikale Stellung bewegt und gleichzeitig in der vertikalen Stellung gegenüber der ursprünglichen horizontalen Stellung versetzt ist. Die Greifeinrichtung ist von untergeordneter Bedeutung und wird an den jeweiligen Einsatzzweck angepasst werden. Bei Benutzung zum Greifen von Glasmacherpfeifen ist die Greifeinrichtung eine beispielsweise pneumatisch betätigte Zange.

Der Bewegungswinkel von Ausleger einerseits und Schwenkarm andererseits kann abhängig von dem Untersetzungsverhältnis der das Getriebe bildenden Zahnräder verändert werden. Für eine Vielzahl von Anwendungsgebieten wird es dabei günstig sein, wenn die beiden Zahnräder auf der Schwenkachse und der Querachse gleichen Durchmesser bzw. gleiche Zähnezahl aufweisen, da dann der Schwenkwinkel von Ausleger und Schwenkarm jeweils gleich sind.

Der Antrieb des Auslegers kann in unterschiedlicher Weise erfolgen. Günstig ist es allerdings, wenn der Ausleger erfindungsgemäss mittels eines Exzentertriebes um die Querachse drehbar ist, da dann die Steuerung sehr einfach ausfallen kann. Vorteilhafterweise wird dabei die Anordnung so getroffen, dass der Ausleger bei einer Drehung des Exzenters um 180° um 90° gedreht wird. Bei dieser Ausbildung kann der Exzentertrieb ständig in der gleichen Richtung laufen. Es wird dann durch den Exzenter der Ausleger hin- und hergeschwenkt.

Weitere ausgestaltende Einzelheiten und Vorteile der Erfindung ergeben sich aus der folgenden Beschreibung eines bevorzugten Ausführungsbeispieles anhand der Zeichnung, in der die Vorrichtung zur Bewegung einer Glasmacherpfeife während der Külbelherstellung in unterschiedlichen Positionen schematisch dargestellt ist.

Es zeigen:

Fig. 1 eine Draufsicht auf die Vorrichtung in der ersten Stellung mit horizontaler Glasmacherpfeife,

Fig. 2 eine Seitenansicht von rechts zu der Draufsicht der Fig. 1,

Fig. 3 eine Vorderansicht zu der Draufsicht der Fig. 1, und

Fig. 4 eine Ansicht entsprechend Fig. 3, jedoch bei in etwa vertikaler Stellung befindlicher und seitlich versetzter Glasmacherpfeife.

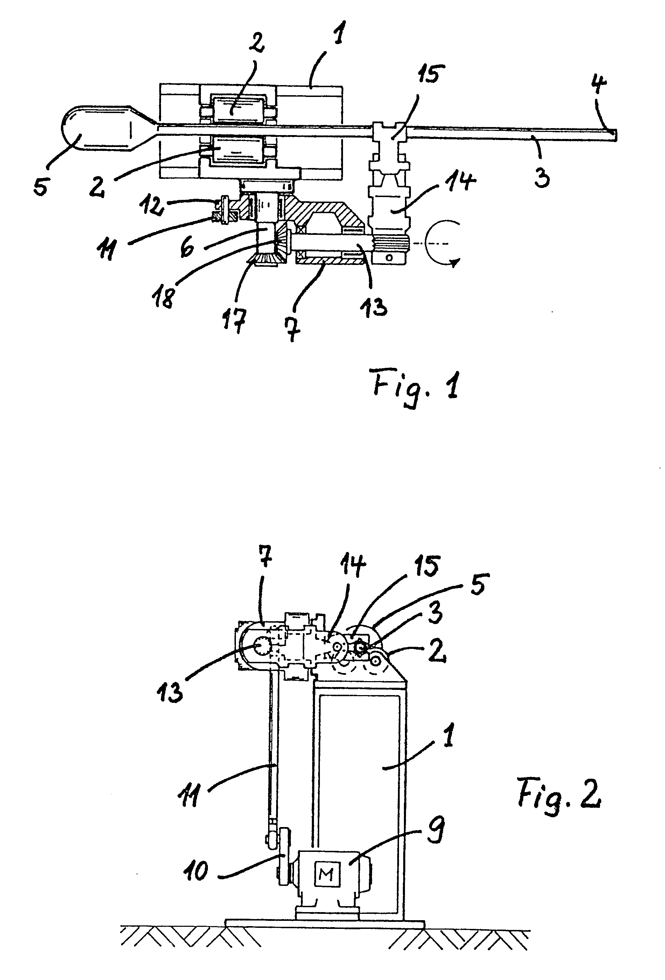

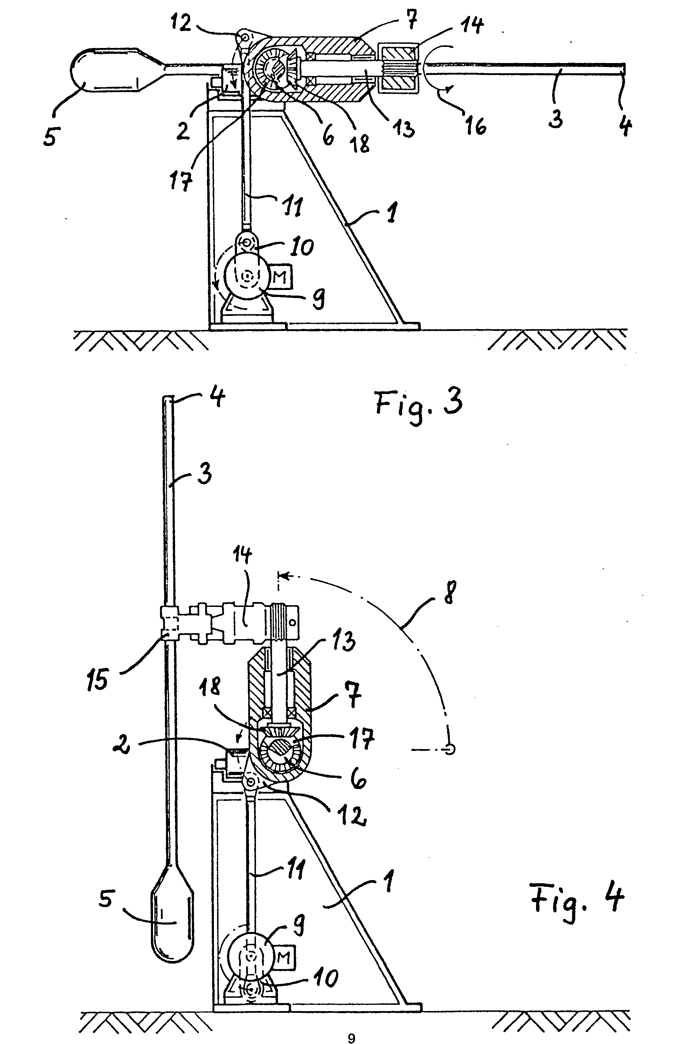

Die Vorrichtung nach der Erfindung umfasst einen Ständer 1, welcher oberseitig eine von mehreren, gegebenenfalls angetriebenen, horizontalen Rollen 2 gebildete Drehhilfe für die etwa horizontal liegende Glasmacherpfeife 3 aufweist. Die Glasmacherpfeife 3 ist ein Rohr, in dessen hinteres Ende 4 zur Erzeugung eines Külbels 5 aus einem aus dem Ofen mit dem vorderen Ende der Pfeife 3 entnommenen Glasposten von dem Glasmacher hineingeblasen bzw. Druckluft eingeführt wird. Während dieses Blasvorganges wird die Glasmacherpfeife 3 entweder mittels der von den Rollen 2 gebildeten Drehhilfe oder durch den Glasmacher von Hand in Drehung versetzt. Sobald das Külbel in der Position gemäss den Fig. 1 bis 3 fertiggestellt ist, muss die Glasmacherpfeife 3 in die Vertikalposition gemäss Fig. 4 gebracht und gleichzeitig bei der Vorrichtung nach der Erfindung seitlich versetzt werden, damit eine neue Glasmacherpfeife zwischen die Rollen 2 der Drehhilfe eingelegt werden kann.

Zu diesem Zweck ist die Vorrichtung nach der Erfindung vorhanden. Diese Vorrichtung umfasst eine Querachse 6, welche an dem Ständer 1 drehfest gehaltert ist. Um diese Querachse 6 kann ein Ausleger 7 gedreht werden, und zwar bei dem dargestellten Ausführungsbeispiel aus einer etwa horizontal ersten Position (Fig. 1 bis 3) in eine etwa senkrechte Position (Fig. 4). Diese Schwenkbewegung ist in Fig. 4 durch den Pfeil 8 angedeutet.

Zur Bewegung des Auslegers 7 um die Querachse 6 dient ein mittels eines Motors 9 angetriebener Exzenterhebel 10, welcher über eine Stange 11 an einem Auge 12 des Auslegers 7 angreift. Die Abmessungen sind bei dem Ausführungsbeispiel nach der Erfindung so gewählt, dass bei einem Drehwinkel des Exzenterhebels 10 von 180° sich der Ausleger 7 lediglich um 90° bewegt, wie insbesondere ein Vergleich der Fig. 3 und 4 deutlich erkennen lässt. Dies hat zur Folge, dass zur Hin- und Herbewegung des Auslegers 7 der den Exzenterhebel 10 antreibende Motor 9 stets in der gleichen Richtung weiterlaufen kann. Es ist nur gegebenenfalls erforderlich, ihn jeweils nach 180° anzuhalten, d.h. wenn der Exzenterhebel 10 nach oben oder unten weist.

In dem Ausleger 7 ist senkrecht zur Querachse 6 eine Schwenkachse 13 drehbar gelagert, mit der drehfest ein Schwenkarm 14 verbunden ist, welcher an seinem freien Ende eine im vorliegenden Fall von einer Zange gebildete Greifeinrichtung 15 für die Glasmacherpfeife trägt. Die Ausbildung der Greifeinrichtung 15 ist für die Erfindung ohne Bedeutung, weshalb sie nicht näher erläutert wird. Beispielsweise wäre es denkbar, eine pneumatisch betriebene Zange als Greifeinrichtung 15 zu verwenden.

Die feststehende Querachse 6 und die im Ausleger 7 drehbare Schwenkachse 13 für den Schwenkarm 14 mit der Greifeinrichtung 15 sind getriebemässig derart miteinander gekoppelt, dass bei einer Verdrehung des Auslegers 7 um die Querachse 6 (Pfeil 8 in Fig. 4) gleichzeitig auch die Schwenkachse 13 mit dem Schwenkarm 14 entsprechend Pfeil 16 in Fig. 3 gedreht wird. Zu diesem Zweck trägt die Querachse 6 an ihrem vom Ständer 1 entfernten Ende ein Kegelrad 17, das mit einem auf dem dem Schwenkarm 14 entfernten Ende der Schwenkachse 13 sitzenden Kegelrad 18 kämmt. Die beiden Kegelräder 17, 18 haben beim gezeigten Ausführungsbeispiel gleichen Durchmesser bzw. gleiche Zähnezahl mit der Folge, dass der Schwenkwinkel des Schwenkarmes 14 gleich dem Schwenkwinkel des Auslegers 7 ist. Wenn also der Ausleger 7 entsprechend Pfeil 8 um 90° gegenüber der Querachse 6 verdreht wird, dreht sich gleichzeitig der Schwenkarm 14 mit der Greifeinrichtung 15 ebenfalls um 90° um die Schwenkachse 13, und zwar bei der gezeigten Anordnung der Kegelräder jeweils gegenüber der Position der Fig. 1 bis 3 nach oben. Selbstverständlich wäre es auch denkbar, die Kegelräder anders anzuordnen, um auf diese Weise eine Bewegung des Schwenkarmes nach unten zu erreichen, wenn der Ausleger 7 nach oben schwenkt. Auch weitere Bewegungsfolgen sind selbstverständlich denkbar.

Bei Benutzung der Vorrichtung gemäss dem Ausführungsbeispiel ist es für den Glasmacher nach Beendigung der Külbelherstellung, wo sich die Glasmacherpfeife in der Position nach den Fig. 1 bis 3 befindet, nur noch erforderlich, den Exzentertrieb auszulösen. Hierauf bewegt der Motor 9 über den Exzenterhebel 10 und die Stange 11 den Ausleger 7 aus der Position der Fig. 3 nach oben in die Stellung der Fig. 4. Gleichzeitig wird durch das Abrollen der Kegelräder 17 bzw. 18 aufeinander der Schwenkarm 14 gegenüber der Stellung der Fig. 1 bis 3 nach oben bewegt. Auf diese Weise wird die Glasmacherpfeife 3 aus der horizontalen Ausgangsstellung in eine vertikale Position gebracht und gleichzeitig infolge der Verschwenkung des Schwenkarmes 14 um 90° seitlich (gegenüber Fig. 3) nach vorne in eine durch die Schwenkachse 13 verlaufende Ebene, also eine Ebene, die gegenüber der ursprünglichen Position der Glasmacherpfeife (Fig. 1) versetzt ist, bewegt. In dieser Senkrechtstellung verbleibt die Glasmacherpfeife 3 dann so lange, bis das Külbel 5 ausreichend hart ist. Während dieser Zeit kann der Glasmacher mit einer zweiten Glasmacherpfeife aus dem Ofen einen neuen Posten entnehmen und die Külbelfertigung beginnen, sei es von Hand, sei es unter Verwendung der von den Rollen 2 gebildeten Drehhilfe.

Sobald das Külbel 5 hinreichend hart ist, entnimmt der Glasmacher, üblicherweise ein zweiter Mann, die Glasmacherpfeife aus der Vorrichtung, die sich zu diesem Zeitpunkt in der Position nach Fig. 4 befindet. Die Greifeinrichtung 15 ist dann zur Aufnahme einer neuen Glasmacherpfeife frei. Hierzu muss sie in die Position der Fig. 1 bis 3 zurückbewegt werden, was durch erneute Einschaltung des Motors 9 geschieht, der den Exzenterhebel 10 um 180° dreht, so dass der Ausleger 7 und der Schwenkarm 14 in die Ausgangsposition der Fig. 1 bis 3 zurückkehren.

### Patentansprüche

1. Vorrichtung zum Bewegen von Glasmacherpfeifen (3) zwischen einer etwa horizontalen und einer etwa vertikalen Stellung unter gleichzeitiger seitlicher Versetzung, welche einen um eine Schwenkachse (13) drehbaren Schwenkarm (14) aufweist, der an seinem freien Ende eine Greifeinrichtung (15) trägt, wobei die Schwenkachse (13) in einem Ausleger (7) drehbar gelagert ist, welcher in Abstand vom Schwenkarm (14) um eine senkrecht zur Schwenkachse (13) verlaufende, feststehende horizontale Querachse (6) drehbar ist, und wobei die Schwenkachse (13) mit der Querachse (6) getriebemässig derart gekoppelt ist, dass bei Drehung des Auslegers (7) um die Querachse (6) gleichzeitig eine Drehung der Schwenkachse (13) mit dem die Greifeinrichtung (15) aufweisenden Schwenkarm (14) erfolgt.

2. Vorrichtung nach Anspruch 1, dadurch gekennzeichnet, dass die Schwenkachse (13) an ihrem dem Schwenkarm (14) entfernten Ende drehfest ein Zahnrad (18) trägt, welches mit einem auf der Querachse (6) festen Zahnrad (17) kämmt.

3. Vorrichtung nach Anspruch 2, dadurch gekennzeichnet, dass die beiden Zahnräder (17, 18) auf der Schwenkachse (13) und auf der Querachse (6) als Kegelzahnräder ausgebildet sind.

4. Vorrichtung nach einem der Ansprüche 2 oder 3, dadurch gekennzeichnet, dass die beiden Zahnräder (17, 18) auf der Schwenkachse (13) und der Querachse (6) gleichen Durchmesser bzw. gleiche Zähnezahl aufweisen.

5. Vorrichtung nach einem der vorhergehenden Ansprüche, dadurch gekennzeichnet, dass der Ausleger (7) mittels eines Exzentertriebes (9, 10, 11) um die Querachse (6) drehbar ist.

6. Vorrichtung nach Anspruch 5, dadurch gekennzeichnet, dass der Ausleger (7) bei einer Drehung des Exzenters (10) um 180° um 90° gedreht wird.

### Claims

1. Device for moving glassmaker's blowing irons (3) between an approximately horizontal and an approximately vertical position with simultaneous lateral movement, the device having a swivel arm (14) which can be rotated about a swivel pin (13), the swivel arm (14) supporting at its free end a gripping device (15), and the swivel pin (13) being pivotally mounted in an extension arm (7), which can be rotated at a distance from the swivel arm (14) about a fixed, horizontal, transverse pin (6) running at right angles to the swivel pin (13), and the swivel pin (13) being connected by gears with the transverse pin (6) in such a way that when the extension arm (7) is rotated about the transverse pin (6) the swivel pin (13) at the same time rotates with the swivel arm (14) possessing the gripping device (15).

2. Device according to Claim 1, characterised in that the swivel pin (13) carries, fixed against rotation, at its end farther away from the swivel arm (14) a gearwheel (18), which meshes with a fixed gearwheel (17) on the transverse pin (6).

3. Device according to Claim 2, characterised in that the two gearwheels (17, 18) on the swivel pin (13) and on the transverse pin (6) are designed as bevel gearwheels.

4. Device according to Claim 2 or 3, characterised in that the two gearwheels (17, 18) on the swivel pin (13) and the transverse pin (6) have the same diameter and the same number of teeth.

5. Device according to one of the preceding claims, characterised in that the extension arm (7) can be rotated about the transverse pin (6) by means of an eccentric drive (9, 10, 11).

6. Device according to Claim 5, characterised in that the extension (7) is rotated through 90° when the eccentric rotates through 180°.

### Revendications

1. Dispositif pour déplacer des cannes de soufflage de verrerie (3) entre une position sensiblement horizontale et une position sensiblement verticale, avec un décalage latéral simultané; ce dispositif comportant un bras tournant (14), mobile autour d'un axe de pivotement (13) et pourvu, à son extrémité libre, d'un organe de préhension (15); le dispositif étant caractérisé en ce que l'axe de pivotement (13) est monté rotativement dans un bras de soutien (7), qui peut tourner autour d'un axe transversal horizontal (6), lui-même fixe, perpendiculaire à l'axe de pivotement (13) et disposé à une certaine distance du bras tournant (14); et en ce que l'axe de pivotement (13) est accouplé avec l'axe transversal (6) par un système d'engrenages, de telle manière que la rotation du bras de soutien (7) autour de l'axe transversal (6) s'accompagne d'une rotation de l'axe de pivotement (13) avec le bras tournant (14) qui porte l'organe de préhension (15).

2. Dispositif selon la revendication 1, caractérisé en ce que l'axe de pivotement (13), à son extrémité éloignée du bras tournant (14), porte une roue dentée (18) qui est solidaire de l'axe en rotation et qui est en prise avec une roue dentée (17) fixée à l'axe transversal (6).

3. Dispositif selon la revendication 2, caractérisé en ce que les deux roues dentées (17, 18) montées sur l'axe de pivotement (13) et sur l'axe transversal (6) sont des roues dentées coniques.

4. Dispositif selon l'une des revendications 2 ou 3, caractérisé en ce que les deux roues dentées (17, 18) montées sur l'axe de pivotement (13) et sur l'axe transversal (6) ont le même diamètre et le même nombre de dents.

5. Dispositif selon l'une des revendications 1 à 4, caractérisé en ce que le bras de soutien (7) est entraîné en rotation autour de l'axe transversal (6) au moyen d'un système à excentrique (9, 10, 11).

6. Dispositif selon la revendication 5, caractérisé en ce que le bras de soutien (7) effectue une rotation de 90° pour une rotation de 180° de l'organe d'entraînement excentrique (10).

Fig. 1

Fig. 2

0 067 273

Fig. 3

Fig. 4